# EUROPÄISCHE PATENTSCHRIFT

(11) **EP 1 284 278 B1**
(45) Veröffentlichungstag und Bekanntmachung des Hinweises auf die Patenterteilung: **23.01.2013**
(21) Anmeldenummer: 02018092.3
(22) Anmeldetag: 13.08.2002
(51) Int. Cl.: C08G 18/08

(54) **Wässrige Beschichtungszusammensetzung für die Herstellung elektrisch leitfähiger Beschichtungen auf Textilien**
Aqueous coating composition for the preparation of electrically conductive coatings on textiles
Composition aqueuse de revêtement pour la fabrication des revêtements électroconducteurs sur des textiles

(30) Priorität: 14.08.2001 EP 01119520
(43) Veröffentlichungstag der Anmeldung: 19.02.2003
(73) Patentinhaber: Benecke-Kaliko AG, 30419 Hannover (DE)
(72) Erfinder: Ritter, Wolfgang, 67591 Offstein (DE); Knerr, Inge, 68309 Mannheim (DE); Zoschke, Christine, 68165 Mannheim (DE)
(74) Vertreter: Reitstötter - Kinzebach

(56) Entgegenhaltungen:
- EP-A- 0 409 099
- WO-A-96/07488
- US-A- 4 419 279
- US-A- 4 579 882
- US-A- 4 624 865
- US-A- 5 786 785

## Beschreibung

Die vorliegende Erfindung betrifft ein Verfahren zur Herstellung elektrisch leitfähiger Beschichtungen auf flächigen, elektrischen Strom nicht leitenden, textilen Trägern. Sie betrifft weiterhin die mit diesen Beschichtungszusammensetzungen beschichteten elektrisch leitfähigen textilen Flächengebilde.

Elektrische bzw. elektromagnetische Felder entstehen bekanntermaßen, wenn ein elektrischer Strom fließt oder eine elektrische Spannung vorliegt. Starke elektr(omagnet)ische Felder, wie sie beispielsweise bei Hochspannungsleitungen, Industrieanlagen, Radarstationen, Fernseh-, Radio- und Richtfunksendern, Mobiltelefonen, mit Hochspannung betriebenen elektrischen Geräten wie Bildschirmen in Fernsehgeräten und Computermonitoren auftreten, stellen in vieler Hinsicht eine ernstzunehmende Umweltbelastung dar. Beispielsweise können äußere elektromagnetische Felder (Störfelder) Störungen an elektronischen Messgeräten, Fernmeldeeinrichtungen, Antennen, Computern, Mikroprozessoren, elektronischen Geräten für die Navigation von Schiffen und Flugzeugen oder allgemein an elektrischen und elektronischen Geräten, deren Funktion auf elektromagnetischen Prinzipien basieren, mit z.T. folgenschwere Auswirkungen hervorrufen. In diesem Zusammenhang spielt auch der Schutz elektronischer Geräte vor Beschädigung durch extreme Felder, wie sie bei Blitzschlägen auftreten, einen wichtiger Aspekt. Ein weiterer Gesichtspunkt ist die Abhörsicherheit von EDV-Geräten, z.B. von Computerbildschirmen, da die Verarbeitung und Visualisierung von Daten in diesen Geräten selber elektromagnetische Felder erzeugt, die mittels geeigneter Empfangsgeräte von unberechtigten Dritten abgehört und ausgewertet werden können. Weiterhin können durch Exposition starker elektrischer bzw. elektromagnetischer Felder Gesundheitsschäden hervorgerufen werden. Die Abschirmung von elektromagnetischen Feldern ist daher in vielen zivilen Bereichen wie Medizin, Automobilindustrie, Büro, Haushalt, Industrieanlagen, Telekommunikations- und EDV-Anlagen sowie auf militärischem Gebiet sowohl zum Personen- wie auch zum Sachschutz erforderlich.

Die Abschirmung von elektromagnetischen Feldern nutzt bekanntermaßen den Faraday-Effekt. So werden häufig Gegenstände, die vor elektromagnetischen Feldern geschützt werden sollen mit Metallgeflechten, Metallblechen oder Metallfolien im Sinne eines Faraday'schen Käfigs umgeben. In ähnlicher Weise können auch Quellen elektromagnetischer Felder abgeschirmt werden. Diese Abschirmungen sind jedoch üblicherweise starr und werden daher in die zu schützenden, bzw. abzuschirmenden Geräte eingebaut.

Für viele Zwecke benötigt man flexible Abschirmungen. Hier bieten sich prinzipiell elektrisch leitfähige Textilien an, die aufgrund ihrer Natur flexibel sind, und daher z. B. als Schutzkleidung, Schutzüberzug für Geräte oder zur Abschirmung von Räumen oder Fenstern in Form von Vorhängen, Tapeten oder Raumteilern eingesetzt werden können. Die bislang bekannten elektrisch leitfähigen Textilien verdanken ihre Leitfähigkeit metallischen Fäden, vorzugsweise Kupfer- oder Silber-beschichteten Kupferfäden, die in die Gewebe eingewebt werden. Um die Flexibilität des Gewebes beizubehalten, müssen die verwendeten Fäden sehr dünn sein. Nachteilig an diesen Geweben ist ihre relativ aufwendige und daher teure Herstellung. Ferner besteht ein verstärktes Interesse daran, Gewebe oder andere Flächengebilde erst nachträglich mit der elektrischen Leitfähigkeit auszurüsten. Dies hätte den Vorteil, dass man die Schutzvorrichtung z. B. aus Fäden bzw. Fasermaterialien unterschiedlichster Herstellverfahren anfertigen könnte.

In der US 4,419,279 werden elektrisch leitfähige Pasten beschrieben, die Silber und mit Silber beschichtete nichtmetallische Teilchen enthalten, welche in einer Matrix aus einem polymeren Bindemittel und einem Lösungsmittel vorliegen. Die Pasten dienen zur Herstellung elektrisch leitfähiger Formkörper. Zur Herstellung elektrisch leitfähiger Textilien sind die Pasten nicht geeignet.

Aus der US 5,786,785 sind Zusammensetzungen bekannt, die elektromagnetische Strahlung absorbieren und die neben einem polymeren Bindemittel und einem organischen Lösungsmittel ein Pulver aus feinteiligen, mit einer dünnen Edelmetallschicht gecoateten magnetischen Partikeln enthalten. Mit den dort beschriebenen Zusammensetzungen werden keine elektrisch leitfähigen Beschichtungen erhalten.

Aus der EP 0409099 sind leitfähige Beschichtungszusammensetzungen basierend auf mit Metallen beschichteten Glaskügelchen bekannt.

Aus der US 4579882 sind Abschirmungsmaterialien für elektromagnetische Strahlung bekannt, welche eine Beschichtungszusammensetzung basiernd auf einer Polymermatrix und einem in der Matrix dispergierten anorganischen, mit Metall beschichteten Pulver aufweisen.

Eigene Untersuchungen der Anmelderin haben gezeigt, dass mit konventionellen, wässrigen Beschichtungszusammensetzungen für Textilien, die einen Zusatz feinteiliger, elektrisch leitfähiger Materialien wie Kupferpulver, Aluminiumpulver, Graphit, blättchenförmiges Aluminium, Kupfermikrokugeln oder -Plättchen, versilberte Kupferblättchen, Leitruß oder Carbonstapelfaser, enthalten, keine elektrisch leitfähigen Beschichtungen erhalten werden. Als elektrisch leitfähig werden im Folgenden solche Beschichtungen bezeichnet, deren Leitfähigkeit σ für elektrischen Strom durch einen Wert von wenigstens 2 x 10⁻² Ω⁻¹ charakterisiert ist, bzw. die bei einer Probenbreite von 0,1 m, einem Elektrodenabstand von 0,1 m und einer angelegten Spannung von 12,5 V einen Stromfluss von wenigstens 250 mA zeigen.

Der vorliegenden Erfindung liegt die Aufgabe zugrunde, ein Verfahren zur Herstellung elektrisch leitfähiger textiler Flächengebilde zur Verfügung zu stellen. Die elektrische Leitfähigkeit der Flächengebilde soll auch bei mechanischer Beanspruchung nicht verloren gehen.

Diese Aufgabe konnte überraschenderweise durch ein Verfahren gelöst werden, bei dem man auf einen flächigen, elektrischen Strom nicht leitenden, textilen Träger wenigstens eine wässrige Beschichtungszusammensetzung, enthaltend:
- als Komponente i) wenigstens ein polymeres Bindemittel B in Form einer wässrigen Dispersion, wobei das polymere Bindemittel wenigstens 50 Gew.-%, bezogen auf das Gesamtgewicht des Bindemittels, Polyurethane umfasst und
- wenigstens ein feinteiliges, nicht filmbildendes Pulver P, dessen Pulverteilchen einen Kern, welcher elektrischen Strom nicht leitet, und wenigstens eine auf dem Kern angeordnete Schicht aus einem elektrisch leitfähigen Material umfassen, wobei das elektrisch leitfähige Material aus wenigstens einem Edelmetall oder einer überwiegend aus wenigstens einem Edelmetall bestehenden Legierung besteht, oder eine Mischung aus Pulver P und einem feinteiligen, versilberten Metallpulver als Komponente ii),
wobei das Gewichtsverhältnis von Komponente i) (=Bindemittel B) zu Komponente ii) im Bereich von 1:1 bis 1:20 liegt; in einer Menge aufbringt und zu einer Beschichtung verfestigt, dass die erhaltene Beschichtung wenigstens 5 g/m² der Komponente ii) enthält und dass eine trockene Beschichtung mit einer Auflage im Bereich von 10 bis 100 g/m² resultiert.

Die wässrige Beschichtungszusammensetzungen werden in an sich bekannter Weise auf flächige, üblicherweise elektrischen Strom nicht leitende textile Träger aufgebracht und zu einer Beschichtung verfestigt, wodurch man eine Beschichtung erhält, die elektrischen Strom leitet. Der mit der elektrisch leitfähigen Beschichtung versehene textile Träger wird im Folgenden auch als elektrisch leitfähiges textiles Flächengebilde bezeichnet. Die vorliegende Erfindung betrifft daher ein Verfahren zur Herstellung elektrish leitfähiger textiler Flächengebilde umfassend das Aufbringen einer derartigen Beschichtungszusammensetzung auf einen flächigen, elektrischen Strom nicht leitenden textilen Träger und das Verfestigen zu einer Beschichtung, wobei die Auftragsmenge an Beschichtungsmittel so ausgewählt ist, dass die erhaltene Beschichtung eine Auflage von wenigstens 5 g/m² der Komponente ii) aufweist, und dass eine trockene Beschichtung mit einer Auflage im Bereich von 10 bis 100 g/m² resultiert.

Die auf diese Weise erhaltenen elektrisch leitfähigen, textilen Flächengebilde weisen im Übrigen Eigenschaften auf, die konventionell beschichteten textilen Flächengebilden vergleichbar sind und zeichnen sich zudem durch eine hohe Abriebfestigkeit aus. Sie sind daher ebenfalls Gegenstand der vorliegenden Erfindung. Vorteilhafterweise kann man durch Wahl des Bindemittel die gewünschte Flexibilität des beschichteten textilen Flächengebildes dem Anwendungszweck anpassen.

Wesentlicher Bestandteil der wässrigen Beschichtungszusammensetzungen ist die Komponente ii). Das Gewichtsverhältnis von polymerem Bindemittel B zu Komponente ii) liegt dabei vorzugsweise im Bereich von 1:1,1 bis 1:20, insbesondere im Bereich von 1:1,2 bis 1:15, besonders bevorzugt im Bereich 1:1,4 bis 1:8 und ganz besonders bevorzugt 1:1,5 bis 1:5.

Die Teilchen des Pulvers P umfassen einen Kern und eine auf dem Kern schalenförmig angeordnete, elektrisch leitfähige Beschichtung aus einem Edelmetall oder einer Edelmetall-Legierung.

Der Kern kann grundsätzlich aus einem beliebigen, elektrischen Strom nicht leitenden Material bestehen, beispielsweise aus einem oxidischen Material, z. B. einem keramischen Material, vorzugsweise aus Glas. Als Gläser sind übliche Alkali- und Erdalkalisilicat-Gläser sowie Borosilikat-Gläser Aluminosilikat-Gläser, Borat-Gläser, Germanat-Gläser, Phosphat-Gläser und dergleichen geeignet. Der Kern kann massiv sein oder als Hohlkörperkugel vorliegen. Vorzugsweise weist der Kern, und damit auch die Pulverteilchen, eine regelmäßige Gestalt, z. B. eine kugelförmige oder ellipsoide Gestalt, auf, wobei das Verhältnis von größtem zu kleinstem Durchmesser einen Wert von 5:1, insbesondere 2:1 nicht überschreitet.

Als Edelmetalle kommen grundsätzlich Gold und Silber und deren Legierungen mit legierbaren Metallen in Betracht. Der Edelmetallanteil beträgt üblicherweise wenigstens 50 Gew.-%, vorzugsweise wenigstens 70 Gew.-%. Als elektrisch leitfähiges Material hat sich insbesondere Silber oder eine Silber-haltige Legierung bewährt. In der Regel der Silberanteil in diesen Legierungen wenigstens 50 Gew.-%, insbesondere wenigstens 70 Gew.-%. Als weitere Metalle kommen Kupfer, Gold, Platinmetalle, Zink, Nickel oder andere mit Silber Legierungen bildende Metalle in Betracht.

Die Pulverteilchen P weisen in der Regel einen mittleren Durchmesser von 1 bis 150 µm, häufig 1 bis 100 µm, vorzugsweise 2 bis 70 µm, insbesondere 5 bis 50 µm, besonders bevorzugt 10 bis 40 µm und ganz besonders bevorzugt 10 bis 30 µm auf. In einer speziellen Ausführungsform liegt er im Bereich von 10 bis 20 µm. Vorzugsweise weisen die Teilchen einen D₁₀-Wert nicht unterhalb 2 µm und insbesondere im Bereich von 4 µm bis 25 µm auf. Der D₉₀-Wert der Pulverteilchen wird vorzugsweise einen Wert von 100 µm und insbesondere von 70 µm nicht überschreiten und liegt insbesondere im Bereich von 15 µm bis 60 µm. Unter dem D₁₀-Wert bzw. dem D₉₀-Wert versteht der Fachmann den Teilchendurchmesser, den 10 bzw. 90 Gew.-% der Pulverteilchen unterschreiten. Dementsprechend bezieht sich hier der mittlere Teilchendurchmesser auf das Gewichtsmittel, und entspricht folglich dem Durchmesser, den 50 Gew.-% der Teilchen über- bzw. unterschreiten.

Der Gewichtsanteil an Edelmetall bzw. Edelmetall-Legierung in dem Pulver P beträgt in der Regel wenigstens 3 Gew.-% und vorzugsweise wenigstens 5 Gew.-% und wird in der Regel einen Wert von 70 Gew.-% und insbesondere 50 Gew.-%, jeweils bezogen auf das Gesamtgewicht des Pulvers, nicht überschreiten. Insbesondere liegt er im Bereich von 10 bis 40 Gew.-% und besonders bevorzugt im Bereich von 15 bis 35 Gew.-%.

Die verwendeten Pulver P sind bekannt, z.B. aus der eingangs zitierten US 4,419,279, und im Handel erhältlich. Geeignete elektrisch leitfähige Pulver P werden beispielsweise unter dem Handelsbezeichnung Conduct-O-Fil® Silver Coated Hollow Glass Spheres (Glashohlkugel, Borosilikatglas, 20 bis 33 ± 2 % Silber), z.B. die Typen SH230S33, SH400S33, SH400S33; Conduct-O-Fil® Silver Coated Glass Spheres (Glasvollkugel, 4 bis 20± 2 % Silber), z.B. die Typen S-2429-S, S-3000-S, S-3000-S2E, S-3000-S2M, S-3000-S3E, S-3000-S3M, S-3000-S3N, S-3000-S4M, S-4000-S3, S-5000-S2, S-5000-S3, S-2429-S, S-2429-S, S-2429-S, und Conduct-O-Fil® Silver Coated Hollow Ceramic Additive (Keramikhohlkugel, 16 bis 30 ± 2 % Silber), z.B. die Typen AG-SL 150-16-TRD und AG-SL 150-30-TRD, von der Firma Potters Industries Inc. Valley Forge, PA USA bzw. von der Firma Potters-Bailotini, Kirchheim-Bolanden/Deutschland, vertrieben.

In einer ganz bevorzugten Ausführungsform werden als Pulver P mit Silber beschichte Glashohlkugeln mit einem Silbergehalt im Bereich von 15 bis 35 Gew.-% und einem mittleren Teilchendurchmesser im Bereich von 10 bis 20 µm eingesetzt. In einer weiteren bevorzugten Ausführungsform werden als Pulver P mit Silber beschichte Glasvollkugeln mit einem Silbergehalt im Bereich von 4 bis 20 Gew.-% und einem mittleren Teilchendurchmesser im Bereich von 10 bis 40 µm eingesetzt.

Die Mitverwendung von anderen feinteiligen, elektrisch leitfähigen Materialien EM, z. B. Metallpulver wie Kupferpulver oder Zinkpulver, Rußpulver, elektrisch leitfähige Polymere, z. B. Polythiophene, Polypyrrole und dergleichen oder Polythiophen/Polystyrolsulfonat-Mischungen, oder Kohlefasern, wie sie üblicherweise zur Antistatik-Ausrüstung von Oberflächen eingesetzt werden, ist grundsätzlich möglich. Der Anteil an derartigen Materialien wird in der Regel 30 Gew.-%, und insbesondere 20 Gew.-%, bezogen auf die Komponente ii) nicht überschreiten. Bevorzugt ist die Mitverwendung von elektrisch leitfähigen Polymeren, z. B. in einer Menge von 0,5 bis 20 Gew.-%, bezogen auf die Komponente ii), z. B. Polythiophene, Polypyrrole und dergleichen oder Polythiophen/Polystyrolsulfonat-Mischungen. Beispiele für derartige Polymere sind insbesondere Poly(3,4-(ethylendioxy)thiophen)/Polystyrolsulfonat, das unter der Handelsbezeichnung Baytron® P von der Fa. Bayer AG, Leverkusen/Deutschland, vertrieben wird.

In einer ersten Ausführungsform umfasst die wässrige Beschichtungs- Zusammensetzung als Komponente ii) ausschliesslich (d.h. zu mindestens 99 %, bezogen auf das Gesamtgewicht der Komponente ii)) wenigstens ein Pulver P.

Überraschenderweise kann durch Mitverwendung von feinteiligen versilbertem Metallpulver, welches allein eingesetzt, nicht zu Beschichtungen mit elektrischer Leitfähigkeit führt, der Anteil des Pulvers P in der Beschichtungszusammensetzung verringert werden, ohne dass es zu Einbußen in der Leitfähigkeit kommt. Eine weitere bevorzugte Ausführungsform der vorliegenden Erfindung betrifft daher Zusammensetzungen, die als Komponente ii) eine Mischung aus wenigstens einem Pulver P und wenigstens einem feinteiligen versilbertem Metallpulver umfasst.

Das Gewichtsverhältnis von versilberten Metallpulver zu dem Pulver P liegt dann vorzugsweise im Bereich von 5:1 bis 1:5 und insbesondere im Bereich von 5:2 bis 1:5.

Bei dem versilberten Metallpulver handelt es sich insbesondere um versilbertes Kupferpulver, z.B. um versilberte Kupferblättchen, vorzugsweise mit einer Größe im Bereich von 1 bis 100 µm. Der Silberanteil beträgt in der Regel 1 bis 50 Gew.-%, z. B. 5 bis 25 Gew.-%, bezogen auf das Metallpulver. Versilberte Metallpulver, insbesondere versilbertes Cu-Pulver, z. B. in Form versilberter Metallblättchen, sind bekannt und werden z. B. unter der Bezeichnung KONTAKTARGAN® von der Fa. Eckart, Fürth/Deutschland, vertrieben.

Als polymeres Bindemittel B kommen grundsätzlich alle wässrigen Dispersionen feinteiliger Polymerer in Betracht, die beim Trocknen der Dispersion, gegebenenfalls bei erhöhter Temperatur, einen Film auf einer Oberfläche zu bilden vermögen, und die wenigstens 50 Gew.-% Polyurethane, bezogen auf das Gesamtgewicht an Bindemittelpolymeren in der Zusammensetzung, umfassen. Der Polyurethan-Anteil bewirkt die mechanische Stabilität, insbesondere die Abriebfestigkeit der Beschichtung. Sofern das Flächengebilde flexibel sein soll, wählt man vorzugsweise unvernetzte polymere Bindemittel oder polymere Bindemittel mit einem geringen Vernetzungbarkeit; wünscht man hingegen eine eher starre Formgebung, so wird man vorzugsweise höher vernetzbare polymere Bindemittel verwenden.

Es ist bevorzugt, wenn das polymere Bindemittel B eine Glasübergangstemperatur T_{G} im Bereich von -40 bis 100 °C, vorzugsweise -20 bis 60 °C aufweist. Sofern das polymere Bindemittel mehrere Polymerkomponenten umfasst sollte zumindest der Polyurethan-Bestandteil eine Glasübergangstemperatur in diesem Bereich aufweisen. Insbesondere liegt die Glasübergangstemperatur von als Bindemittel B geeigneten Polyurethanen im Bereich von -20°C bis + 60°C und besonders bevorzugt im Bereich von -10°C bis + 40°C. Vorzugsweise weisen alle polymeren Bindemittelkomponenten eine Glasübergangstemperatur in diesen Bereichen auf. Bei zu niedriger Glasübergangstemperatur besteht die Gefahr, dass die Oberfläche klebrig ist. Daher verwendet man für den Deckstrich häufig ein Bindemittel, das eine Glasübergangstemperatur oberhalb 0°C insbesondere oberhalb 20°C aufweist. Die angegebenen Glasübergangstemperaturen beziehen sich dabei auf die gemäß ASTM-D 3418-82 mittels DSC bestimmte "midpoint temperature". Im Falle vernetzbare Bindemittel bezieht sich die Glasübergangstemperatur auf den unvernetzten Zustand.

Die Partikelgröße der Polymerteilchen des Bindemittels B liegt in der Regel im Bereich von etwa 10 bis 2000 nm, häufig im Bereich von 20 bis etwa 1500 nm und insbesondere im Bereich von 50 bis 1000 nm.

Das in den wässrigen Beschichtungs- Zusammensetzungen als Bindemittelbestandteil enthaltene Polyurethan wird üblicherweise als wässrige Polyrethan-Dispersion eingesetzt. Wässrige, für die wässrigen Beschichtungs-Zusammensetzungen geeignete Polyurethan-Dispersionen sind insbesondere solche, die für die Beschichtung von Textilien verwendet werden (siehe z.B. J. Hemmrich, Int. Text. Bull. 39, 1993, Nr.2, S. 53-56; "Wässrige Polyurethan-Beschichtungssysteme" Chemiefasern/Textilind. 39 91 (1989) T149, T150; W. Schröer, Textilveredelung 22, 1987, S. 459-467). Wässrige Polyurethandispersionen sind im Handel erhältlich, z.B. unter den Handelsbezeichnungen Alberdingk® der Fa. Alberdingk, Impranil® der Fa. BAYER AG, Permutex® der Fa. Stahl, Waalwijk, Niederlande, der Fa. BASF Aktiengesellschaft oder können nach bekannten Verfahren hergestellt werden, wie sie beispielsweise in "Herstellverfahren für Polyurethane" in Houben-Weyl, "Methoden der organischen Chemie", Band E 20/Makromolekulare Stoffe, S. 1587, D. Dietrich et al., Angew. Chem. 82 (1970), S. 53 ff., Angew. Makrom. Chem. 76, 1972, 85 ff. und Angew. Makrom. Chem. 98, 1981, 133-165, Progress in Organic Coatings, 9, 1981, S. 281-240, bzw. Römpp Chemielexikon, 9. Auflage, Band 5, S. 3575 beschrieben werden.

Bei den Polyurethanen handelt es sich bekanntermaßen um Additionsprodukte aus wenigstens einer Polyisocyanat-Komponente und wenigstens einer Polyol-Komponente. Die Polyisocyanat-Komponente umfasst in der Regel wenigstens ein Diisocyanat. Darüber hinaus kann die Isocyanat-Komponente auch höherfunktionelle Isocyanate, z. B. Triisocyante oder oligomere Isocyanate, die im Mittel mehr als 2 und vorzugsweise 3 oder mehr Isocyanatgruppen aufweisen, umfassen. Die Polyolkomponente umfasst in der Regel wenigstens ein Diol. Die Polyol-komponente kann auch höherfunktionelle Polyole oder oligomere Polyole mit im Mittel mehr als 2 OH-Gruppen, vorzugsweise 3, 4 und mehr OH-Gruppen umfassen.

Geeignete Diisocyanate sind aromatische Diisocyanate wie 2,4- und 2,6-Toluylendiisocyanat (TDI) und Isomerengemische davon, Tetramethylxylendiisocyanat (TMXDI), Xylendiisocyanat (XDI), Diphenylmethan-4,4'-diisocyanat (MDI), sowie aliphatische und cycloaliphatische Diisocyanate, wie Dicylohexylmethan-4,4'-diisocyanat (H₁₂MDI), Tetramethylendiisocyanat, Hexamethylendiisocyanat (HMDI), Isophorondiisocyanat (IPDI), Trimethylhexamethylendiisocyanat sowie Gemische davon. Zu den bevorzugten Diisocyanaten zählen Hexamethylendiisocyanat (HMDI) und Isophorondiisocyanat. Beispiele für höherfunktionelle Isocyanate sind Triisocyanate wie Triphenylmethan-4,4',4''-triisocyanat, die partielle Kondensationsprodukte der obengenannten Diisocyanate wie die Cyanurate und Biurethe der vorgenannten Diisocyanate sowie Oligomere, die durch gezielte Reaktion von Diisocyanaten oder von semiblockierten Diisocyanaten mit Polyolen, welche im Mittel mehr als 2 und vorzugsweise wenigstens 3 OH-Gruppen je Molekül aufweisen, erhältlich sind.

Bevorzugte Polyisocyanate sind aliphatischer oder cycloaliphatischer Natur. Insbesondere sind Diisocyanate der allgemeinen Formel
OCN-(CH₂)ₙ-NCO
mit n = 2 bis 8, insbesondere 4 bis 6 bevorzugt. Der Anteil an Polyisocyanat-Komponente an den Bestandteilen, welche das Polyurethan bilden liegt in der Regel im Bereich von 5 bis 60 Gew.-%, insbesondere im Bereich von 10 bis 40 Gew.-%.

Als Polyolkomponente kommen grundsätzlich niedermolekulare Alkohole mit 2 oder mehr, z.B. 3 oder 4 OH-Gruppen sowie oligomere Polyole in Betracht, die im Mittel wenigstens 2, vorzugsweise 2 bis 4 und insbesondere 2 oder 3 OH-Gruppen aufweisen, welche insbesondere an ihren Termini angeordnet sind.

Geeignete niedermolekulare Alkohole sind insbesondere Glykole mit vorzugsweise 2 bis 25 Kohlenstoffatomen. Hierzu zählen 1,2-Ethandiol, 1,2-Propandiol, 1,3-Propandiol, 1,4-Butandiol, 1,5-Pentandiol, 1,6-Hexandiol, 1,10-Decandiol, Diethylenglykol, Triethylenglykol, Dipropylenglykol, Tripropylenglykol, 2,2,4-Trimethylpentandiol-1,5, 2,2-Dimethylpropandiol-1,3, 1,4-Dimethylolcyclohexan, 1,6-Dimethylolcyclohexan, 2,2-Bis(4-hydroxyphenyl)-propan (Bisphenol A), 2,2-Bis(4-hydroxyphenyl)butan (Bisphenol B) oder 1,1-Bis(4-hydroxyphenyl)-3,3,5-trimethylcyclohexan (Bisphenol C).

Weitere mögliche Bestandteile der Polyol-Komponente sind dreiwertige (Triole) und höherwertige, niedermolekulare Alkohole. Sie weisen in der Regel 3 bis 25, vorzugsweise 3 bis 18 Kohlenstoffatome auf. Hierzu zählen Glycerin, Trimethylolethan, Trimethylolpropan, Erythrit, Pentaerythrit, Sorbit und deren Alkoxylate.

Beispiele für oligomere Polyole sind Polyesterpolyole, Polycarbonatpolyole und Polyetherpolyole. Das zahlenmittlere Molekulargewicht dieser Komponente liegt vorzugsweise im Bereich von 500 bis 20000 Dalton, vorzugsweise 1000 bis 10000 Dalton. Bevorzugt ist die oligomere Komponente aus aliphatischen Bausteinen aufgebaut.

Der Anteil oligomerer Polyole an den das Polyurethan bildenden Komponenten liegt in der Regel im Bereich von 10 bis 95 Gew.-%, vorzugsweise 20 bis 95 Gew.-% und insbesondere 25 bis 85 Gew.-% bezogen auf das Gesamtgewicht der das Polyurethan-bildenden Komponenten. Der Anteil an niedermolekularen Alkoholen beträgt in der Regel nicht mehr als 60 Gew.-% , z.B. 1 bis 60 Gew.-%, und häufig bis 30 Gew.-% oder bis 20 Gew.-%.

Unter Polyetherolen versteht man sowohl lineare als auch verzweigte Polyether, die pro Molekül im Mittel wenigstens 2, vorzugsweise an ihren Termini angeordnete Hydroxylgruppen aufweisen. Bevorzugt sind aliphatische Polyetherpolyole, d.h. Polyetherpolyole die aus aliphatischen und/oder cycloaliphatischen Bausteinen aufgebaut sind. In der Regel erhält man Polyetherpolyole durch Polymerisation von Alkylenoxiden mit 2 bis 4 Kohlenstoffatomen, gegebenenfalls mit einem Starter. Als Alkylenoxid seien beispielsweise Ethylenoxid, 1,2-Propylenoxid, 1,2- und 2,3-Butylenoxid, insbesondere Ethylenoxid Propylenoxid, 1,2- und 2,3-Butylenoxid, insbesondere Ethylenoxid und Propylenoxid genannt. Als Startermolekül kommen z. B. Wasser, niedermolekulare Di- oder Polyole, z.B. die zuvor genannten Glykole, oligomere Alkohole, Polyetherole sowie Polyesterole in Betracht. Beispiele für geeignete Starter sind insbesondere Ethandiol, 1,2-und 1,3-Propandiol, Bisphenol A, Glycerin, Trimethylolpropan, Pentaerythrit und Sorbit. Polyetherpolyole mit nur zwei Hydroxyendgruppen erhält man bei der Verwendung von difunktionellen Startern wie Wasser, Ethylenglykol, Propylenglykol sowie bifunktionellen Oligoalkylenoxiden. Polyetherole sind ferner durch kationische Polymerisation von cyclischen Ethern, wie Tetrahydrofuran, zugänglich. Besonders bevorzugte Polyetherpolyole sind Polyetherdiole, hierunter besonders bevorzugt Polyethylenoxid, Polypropylenoxid sowie statistische und Blockcopolymere von Ethylenoxid mit Propylenoxid. Der Polymerisationsgrad der Polyetherole liegt in der Regel im Bereich von ca. 5 bis 200. Das zahlenmittlere Molekulargewicht der Polyethersequenz beträgt insbesondere 500 bis 5000 g/mol.

Unter Polyesterpolyolen versteht man sowohl lineare wie auch verzweigte Polyester mit wenigstens zwei, vorzugsweise endständigen OH-Gruppen. Ihr Molekulargewicht liegt insbesondere im Bereich von 800 bis 20000, speziell im Bereich von 1000 bis 10000 g/mol. Geeignete Polyesterole lassen sich z. B. durch Polykondensation aliphatischer, cycloaliphatischer und aromatischer Di-, Triund/oder Polycarbonsäuren bzw. esterbildender Derivate wie Anhydride oder Chloride mit den vorstehend erwähnten Di- und/oder Polyolen und/oder Polyetherolen herstellen, wobei die Alkohol-Komponente im Überschuss eingesetzt wird, d. h. das Molverhältnis von OH-Gruppen zu Säuregruppen beträgt mehr als 1:1, z. B. 1,1:1 bis 2:1. Geeignete Carbonsäuren sind z. B. aliphatische Dicarbonsäuren mit 2 bis 20 Kohlenstoffatomen, vorzugsweise 4 bis 15 Kohlenstoffatomen, beispielsweise Bernsteinsäure, Glutarsäure, Adipinsäure, Pimelinsäure, Korksäure, Sebacinsäure, Dodecandisäure, Cyclohexandicarbonsäure und aromatische Dicarbonsäuren wie Phthalsäure, Terephthalsäure und Isophthalsäure. Bevorzugt sind Polyesterdiole, die durch Kondensation von Dicarbonsäuren mit Diolen erhältlich sind. Polyesterpolyole können auch durch Polykondensation von Hydroxycarbonsäuren oder Lactonen mit den vorstehend genannten vorstehend genannten Di- bzw. Polyolen hergestellt werden. Geeignete Lactone sind beispielsweise solche mit 3 bis 20 Kohlenstoffatomen, wie α,α-Dimethyl-β-propiolacton, γ-Butyrolacton und ε-Caprolacton. Geeignete Hydroxycarbonsäuren sind α-Hydroxycarbonsäuren wie Glykolsäure, Milchsäure, Hydroxybuttersäure, Mandelsäure, die auch in Form ihrer Lactide vorliegen können oder β-Hydroxycarbonsäuren, γ -Hydroxycarbonsäuren, δ-Hydroxycarbonsäuren bzw. ω -Hydroxycarbonsäuren wie ω-Valeriansäure. Bevorzugt sind aliphatische Polyesterpolyole, d.h. die Bausteine, welche den Polyester bilden sind unter aliphatischen und cycloaliphatischen Bausteinen ausgewählt.

Unter Polycarbonatpolyolen versteht man solche Polycarbonate die pro Molekül im Mittel wenigstens 2, z.B. 2, 3, 4 oder 5, vorzugsweise an ihren Termini angeordnete Hydroxylgruppen aufweisen und die im wesentlichen, i.d.R. zu mehr als 80 Gew.-%, vorzufsweise mehr als 90 Gew.-%, aus Wiederholungseinheiten der allgemeinen Formel I 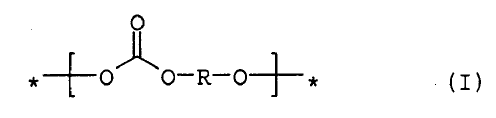 aufgebaut sind. In Formel I steht R für einen bivalenten organischen Rest, der in der Regel 2 bis 20 Kohlenstoffatome aufweist und durch ein oder mehrere z.B. 1, 2, 3 oder 4 nicht benachbarte Sauerstoffatome unterbrochen sein kann. R leitet sich vorzugsweise von einem aliphatischen oder cycloaliphatischen Diol ab. Derartige Polycarbonatpolyole werden üblicherweise als aliphatische Polycarbonatpolyole bezeichnet. Beispiele für geeignete aliphatische Diole sind lineare oder verzweigte Alkylenglykole mit 2 bis 20, vorzugsweise 2 bis 10 C-Atomen, z.B. lineare Alkylenglykole der Formel HO-(CH₂)ₙ-OH mit n = 2, 3, 4, 5, 6, 7 oder 8, vorzugsweise 3, 4, 5, 6 oder 7, Alkylsubstituierte α,ω-Alkandiole mit 3 bis 20 C-Atomen wie Propylenglykol, Neopentylglykol und dergleichen, Oligomere wie Di- Tri- und Tetraethylenglycol, Di-, Tri- und Tetrapropylenglykol, HO-((CH₂)₄O)ₘH mit m = 2, 3, 4 oder 5, weiterhin cycloaliphatische Diole, z.B. Cylohexan-1,4-diol, 1,4-Bis(hydroxymethyl)cyclohexan oder 2,2-Bis(4-hydroxycyclohexyl)propan.

Das Polycarbonatpolyol kann auch eine oder mehrere, z.B. 1, 2 oder 3 Verzweigungstellen aufweisen, die sich von mehrwertigen Alkohlen, wie Glycerin, Trimethylolpropan, Pentaerythrit, oder von Zuckeralkoholen wie Sorbit ableiten. In Abhängigkeit von der Anzahl der Verzweigungsstellen und der Funktionalität des Alkohols weist das resultierende Polycarbonatpolyol eine Hydroxylfunktionalität > 2 auf.

Da die Polyurethane in den wässrigen Beschichtungszusammensetzungen in Form einer wässrigen Dispersion eingesetzt werden, weisen sie in der Regel polare funktionelle Gruppen auf, insbesondere ionogene und/oder ionischen Gruppen z. B. anionische bzw. anionogene Gruppen wie Carbonsäuregruppen, Sulfonsäuregruppen, Phosphonsäuregruppen, Phosphorsäuregruppen, die auch in ihrer Salz-Form z. B. als Alkalimetall- und Ammoniumsalze vorliegen können; kationische bzw. kationogene Gruppen wie Aminogruppen, quaternäre Aminogruppen; und/oder neutrale wasserlösliche Gruppen wie Polyethergruppen, vorzugsweise Polyethylenoxid-Gruppen. Die Einführung dieser funktionellen Gruppen in das Polyurethan erfolgt in der Regel durch Verwendung entsprechend mit anionischen bzw. anionogenen oder kationischen bzw. kationogenen Gruppen substituierter Verbindungen, die wenigstens zwei gegenüber Isocyanat reaktive Gruppen aufweisen, oder im Falle der Polyethergruppen durch Verwendung von Polyetherpolyolen bei der Herstellung der Polyurethane. Der Anteil ionogener Bausteine, bezogen auf die Gesamtmenge der das Polyurethan bildenden Komponenten, liegt in der Regel im Bereich von 0,1 bis 25 Gew.-%, vorzugsweise 0,5 bis 20 Gew.-%. Hinsichtlich der Polyethergruppen gilt das oben gesagte. Je nach Art der ionogenen Komponente werden die Polyurethan-dispersionen auch als anionisch modifiziert bzw. anionenaktiv oder als kationisch modifiziert bzw. als kationenaktiv bezeichnet.

Geeignete Verbindungen mit polaren funktionellen Gruppen sind beispielsweise anionisch modifizierte Di- oder Polyole wie die Reaktionsprodukte von Dicarbonsäuren, die zusätzlich wenigstens eine Phosphonsäuregruppe, Sulfonsäuregruppe oder Sulfonatgruppe aufweisen, mit den vorstehend erwähnten Diolen. Die Dicarbonsäurekomponente umfasst z.B. Sulfobernsteinsäure, 4-Sulfophthalsäure, 5-Sulfoisophthalsäure, Sulfoterephthalsäure, 4-Sulphonaphthalin-2,7-dicarbonsäure, 5-(4-Sulfophenoxy)-terephthalsäure sowie die entsprechenden Salze. Zu den anionisch modifizierten Diolen zählen auch die Diesterdiole von Tri- oder Tetracarbonsäuren mit den zuvor genannten Diolen. Als Tri- oder Tetracarbonsäuren kommen beispielsweise 2-Phosphonobutan-1,2-4-tricarbonsäure, Citronensäure, 1,2,3-Propantricarbonsäure, 1,3,5-Benzoltricarbonsäure (Trimesinsäure), 1,2,4-Benzoltricarbonsäure (Trimellithsäure), 1,2,4,5-Benzoltetracarbonsäure (Pyromellithsäure). Zu den anionisch funktionalisierten Diolen zählen weiterhin lineare oder verzweigte Diole, die aliphatisch, cycloaliphatisch oder aromatisch sein können und die eine anionische funktionelle Gruppe tragen. Beispiele hierfür sind Dimethylolpropionsäure (Bis-2,2-(hydroxymethyl)propionsäure), 2-Sulfo-1,4-butandiol, 2,5-Dimethyl-3-sulfo-2,5-hexandiol sowie deren Salze, insbesondere deren Natrium- und Kaliumsalze. Geeignete anionisch modifizierte Verbindungen sind weiterhin entsprechend substituierte Aminoalkohole und Diamine, z.B. Ethylendiamin-N-essigsäure, Ethylendiamin-N-propionsäure, N-(Sulfonatoethyl)ethylendiamin, deren Salze, insbesondere deren Natrium- und Kaliumsalze.

Geeignete Verbindungen mit polaren funktionellen Gruppen sind weiterhin kationogen modifizierte Verbindungen. Unter kationogen versteht man hier und im Folgenden kationische Gruppen sowie Gruppen, die durch Modifizierung, z.B. Protonierung oder Alkylierung (Quaternisierung) in eine kationische Gruppe überführt werden können. Beispiele hierfür sind kationogen modifizierte Di- oder Polyole, kationogen modifizierte Di- oder Polyamine und Aminoalkohole wie N,N-Bis(hydroxy-C₂-C₈-alkyl)amine, die am Stickstoff einen oder zwei weitere Reste, z.B. einen Arylrest, einen C₁-C₈-Alkylrest oder einen A-ryl-C₁-C₈-alkylrest aufweisen können, weiterhin Hydroxy-C₂-C₈alkylpiperazine Bis(hydroxy-C₂-C₈-alkyl)piperazine, N-(Amino-C₂-C₈alkyl)piperazine und N,N'-Bis(amino-C₂-C₈-alkyl)piperazine und deren Quaternisierungsprodukte.

Bevorzugte Polyurethane sind solche, die aliphatische Polyetherketten (vorzugsweise linear oder einfach verzweigt), insbesondere Poly-C₂-C₄-alkylenoxid-Ketten aufweisen. Diese sind naturgemäß dadurch erhältlich, dass man bei der Herstellung der Polyurethane die oben erwähnten aliphatischen Polyetherpolyole einsetzt. Der Anteil an Polyetherketten in Polyetherurethanen beträgt vorzugsweise 5 bis 80 Gew.-% und insbesondere 10 bis 50 Gew.-% der Gesamtmasse des Polyurethans.

Bevorzugte Polyurethane sind weiterhin aliphatische Polyesterurethane, d.h. Polyurethane, die aliphatische Polyesterketten (vorzugsweise linear oder einfach verzweigt) aufweisen und die dadurch erhältlich sind, dass man die obengenannten aliphatischen Polyesterpolyole bei der Herstellung der Polyurethane einsetzt. Der Anteil an Polyesterketten beträgt vorzugsweise 5 bis 80 Gew.-% und insbesondere 10 bis 70 Gew.-% der Gesamtmasse des Polyurethans.

Bevorzugte Polyurethane sind weiterhin aliphatische Polycarbonaturethane, d.h. Polyurethane, die aliphatische Polcarbonatketten (vorzugsweise linear oder einfach verzweigt) aufweisen und die dadurch erhältlich sind, dass man die obengenannten aliphatischen Polycarbonatpolyole bei der Herstellung der Polyurethane einsetzt. Der Anteil an Polycarbonatketten beträgt vorzugsweise 5 bis 80 Gew.-% und insbesondere 10 bis 70 Gew.-% der Gesamtmasse des Polyurethans.

Vorzugsweise handelt es bei dem in der wässrigen Beschichtungszusammensetzung verwendeten Polyurethan um ein vernetzbares oder um ein selbstvernetzendes Polyurethan. Ein vernetzbares oder selbstvernetzendes Polyurethan weist reaktive funktionelle Gruppen auf, die eine nachträgliche Vernetzung des Polyurethans erlauben. Hierzu zählen insbesondere aliphatisch gebundene OH-Gruppen, NH-CH₂-OH-Gruppen, Carboxylat-Gruppen, Anhydrid-Gruppen, verkappte Isocyanatgruppen und Aminogruppen. Häufig wird man ein Polyurethan verwenden, dass noch freie OH-Gruppen als reaktive Gruppen aufweist. In der Regel beträgt der Anteil der reaktiven funktionellen Gruppen 0,1 bis 3 mol/kg Polymer. Die Vernetzung kann innerhalb des Polyurethans durch Reaktion komplementärreaktiver funktioneller Gruppen bewirkt werden. In diesem Fall spricht man von einem selbstvernetzenden Polyurethan. Vorzugsweise bewirkt man die Vernetzung des Polyurethans durch Zugabe eines Vernetzers, der reaktive Gruppen aufweist, welche hinsichtlich ihrer Reaktivität zu den funktionellen Gruppen des Vernetzers komplementär sind. Geeignete Paare funktioneller Gruppen, die eine komplementäre Reaktivität aufweisen sind dem Fachmann bekannt. Beispiele für solche Paare sind OH/COOH, OH/NCO, NH₂/COOH, NH₂/NCO sowie M²⁺/COOH, wobei M²⁺ für ein zweiwertiges Metallion wie Zn²⁺, Ca²⁺, oder Mg²⁺ steht. Beispiele für geeignete Vernetzer sind die nachstehend genannten Dioder Polyole; primäre oder sekundäre Diamine, vorzugsweise primäre Diamine, z.B. Alkylendiamine wie Hexamethylendiamin, Diethylentriamin, Triethylentetramin, Tetraethylenpentamin, N,N-Bis[(aminopropyl)amino]-ethan, 3,6-Dioxaoctandiamin, 3,7-Dioxanonandiamin, 3,6,9-Trioxaundecandiamin oder Jeffamine, (4,4'-Diaminodicyclohexyl)methan (4,4'-Diamino-3,3-dimethyldicyclohexyl)methan; Aminoalkohole wie Ethanolamin, Hydroxypropylamin; ethoxilierte Di- und Oligoamine; Dihydrazide von aliphatischen oder aromatischen Dicarbonsäuren wie A-dipinsäuredihydrazid; Dialdehyde wie Glyoxal; teilweise oder vollständig O-methylierte Melamine, sowie Verbindungen oder Oligomere, die im Mittel 2 oder mehr, vorzugsweise 3 oder mehr Isocyanatgruppen oder reversibel blockierte Isocyanatgruppen aufweisen.

In diesem Fall wird das Mengenverhältnis von Vernetzer zu polymerem Bindemittel so bemessen, dass das Molverhältnis der reaktiven Gruppen im polymeren Bindemittel (Gesamtmenge der reaktiven Gruppen im Polyurethan und dem in gegebenenfalls vorhandenen Cobindemittel) zu den reaktiven Gruppen im Vernetzer in der Regel im Bereich von 1:10 bis 10:1 und vorzugsweise im Bereich von 3:1 bis 1:3 liegt. Üblicherweise liegt das Gewichtsverhältnis von polymeren Bindemittel (gerechnet als Feststoff) zu Vernetzer im Bereich von 100:1 bis 1:1 und insbesondere im Bereich von 50:1 bis 5:1.

In einer besonders bevorzugten Ausführungsform umfasst das polymere Bindemittel eine Mischung aus einem Hydroxylgruppen aufweisenden Polyurethan, insbesondere einem Polyether- oder Polyesterurethan, und einem Isocyanat-Vernetzer, der freie oder blockierte IsocyanatGruppen aufweist.

Selbstvernetzende Polymerdispersionen, die keine externen Vernetzer benötigen, weisen z.B. OH-Gruppen in Kombination mit Carboxyl- oder Anhydridgruppen, oder N-Methylolamid-Gruppen auf.

Als Cobindemittel können neben dem Polyurethan auch Polymere auf Basis ethylenisch ungesättigter Monomere in Form ihrer wässrigen Dispersion (Polymerlatex) eingesetzt werden. Ihr Anteil beträgt vorzugsweise nicht mehr als 20 Gew.-% insbesondere nicht mehr als 10 Gew.-%, bezogen auf die Gesamtmenge an Bindemittel, d.h. Polyurethan plus Cobindemittel. Geeignete Cobindemittel sind dem Fachmann bekannt, z.B. aus D. Distler "Wässrige Polymerdispersionen", Wiley-VCH, Weinheim, 1999, S. 171 ff. und dort zitierte Literatur.

Beispiele für geeignete Cobindemittel sind:
- Acrylatharze (Reinacrylate);
- Styrolacrylate;
- Styrol/Butadien-Copolymerisate;
- Polyvinylester, insbesondere Polyvinylacetate;
- Vinylester-Olefin-Copolymere, z.B. Vinylacetat/Ethylen-Copolymere; sowie
- Vinylester-Acrylat-Copolymere, z.B. Vinylacetat/Alkylacrylat-Copolymere sowie Vinylacetat/Alkylacrylat/Ethylen-Terpolymere.

Derartige Polymerdispersionen sind bekannt und im Handel erhältlich, z.B. unter den Bezeichnungen ACRONAL^{®}, STYROFAN^{®}, BUTOFAN^{®} (BASF-AG), MOWILITH^{®}, MOWIPLUS^{®}, APPRETAN^{®} (Clariant), VINNAPAS^{®}, VINNOL^{®} (WACKER). Die Glasübergangstemperatur der Cobindemittel liegt in der Regel im Bereich von -60 bis +60 °C, insbesondere im Bereich von -50 bis +30 °C und insbesondere im Bereich von -40 bis +20 °C. Ähnlich wie die Polyurethane können auch die Cobindemittel vernetzbare Gruppen aufweisen oder als selbstvernetzendes Bindemittel ausgestaltet sein. Bezüglich der Anzahl der vernetzend wirkenden Gruppen und dem Verhältnis von Vernetzer zur Gesamtmenge an Bindemittel gilt das oben gesagte.

Als Cobindemittel können auch Polysiloxane, vorzugsweise zusammen mit den vorgenannten Polyurethanen eingesetzt werden. Polysiloxane werden auch als Silikonkautschuke bezeichnet und sind im Handel erhältlich.

In einer bevorzugten Ausführungsform ist das Polyurethan alleiniger polymerer Bindemittelbestandteil. Grundsätzlich kann der Anteil an Cobindemittel jedoch auch 10 bis 50 Gew.-% und insbesondere 20 bis 40 Gew.-% betragen, ohne dass nennenswerte Einbußen an mechanischer Festigkeit der Beschichtung zu verzeichnen sind.

Die in der wässrigen Beschichtungszusammensetzung verwendeten Beschichtungsmittel enthalten neben den Komponenten i) und ii) naturgemäß ein wässriges Verdünnungsmittel, in dem die festen Komponenten i) und ii) in disperser, d.h. feinverteilter Form vorliegen. Das wässrige Verdünnungsmittel, das auch als Dispergiermedium bezeichnet wird, kann Wasser oder eine Mischung aus Wasser mit einem organischen Lösungsmittel sein. Der Anteil an organischen Lösungsmitteln wird jedoch in der Regel 20 Gew.-% und insbesondere 10 Gew.-%, bezogen auf das Gesamtgewicht an wässrigem Dispergiermedium, nicht überschreiten.

Beispiele für geeignete Lösungsmittel sind Ketone, beispielsweise Aceton oder Methylethylketon, Ether, beispielsweise Tetrahydrofuran, Dioxan, 1,2-Propandiol-1-n-propylether, 1,2-Butandiol-1-methylether, Ethylenglykolmonomethylether, Diethylenglykolmonomethylether, Diethylenglykoldimethylether, Mono- oder Polyalkohole wie Methanol, Ethanol, n-Propanol, Isopropanol, Glykol, Glycerin, Propylenglykol oder Polyethylenglykol, sowie deren Gemische. Geeignet sind auch aliphatische Kohlenwasserstoffe, z. B. Hexan, Cyclohexan, Petroletherfraktionen, Benzinfraktionen oder aromatische Kohlenwasserstoffe wie Toluol.

Die Menge an Verdünnungsmittel wird in der Regel so bemessen, dass die resultierende wässrige Dispersion einen Feststoffgehalt von 10 bis 90 Gew.-%, vorzugsweise etwa 20 bis 80 Gew.-%, ganz besonders bevorzugt etwa 45 bis 70 Gew.-% aufweist.

Ferner kann die Beschichtungszusammensetzung übliche Zusätze, wie sie bei konventionellen Beschichtungszusammensetzungen für Textilien eingesetzt werden und die sie z. T. in bekannter Weise nach dem Anwendungszweck richten, enthalten. Hierzu zählen, Farbmittel, Füllstoffe, Dispergierhilfsmittel, oberflächenaktive Substanzen, Verdicker, Entschäumer, Mittel zur Einstellung des pH-Wertes, Antioxidantien, Flammschutzmittel und Konservierungsmittel.

Bevorzugte Farbmittel sind anorganische und organische Pigmente. Diese sind im Handel als Pulver sowie als feste oder flüssige Pigmentpräparation erhältlich. Typische anorganische Pigmente sind Titandioxid, Bariumsulfat, Zinkoxid und Eisenoxid. Neben den anorganischen Pigmenten können die Beschichtungszusammensetzungen auch organische Farbpigmente wie Sepia, Gummigutt, Kasseler Braun, Touidinrot, Pararot, Hansagelb, Indigo, Azofarbstoffe, anthrachinoide und indigoide Farbstoffe enthalten. Gegebenenfalls verwendet man Pigmentgemische. Das Pigment sollte möglichst feinteilig vorliegen. Vorzugsweise haben die Pigmentteilchen eine Teilchengröße ≤ 5 µm. Der Anteil an Farbmitteln wird häufig einen Wert von 20 Gew.-%, bezogen auf die Gesamtmenge an Feststoffen in der Zusammensetzung, überschreiten.

Geeignete Füllstoffe umfassen grundsätzlich Aluminiumsilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliciumdioxid etc. Die Füllstoffe können als Einzelkomponente eingesetzt werden. In der Praxis haben sich auch Füllstoffmischungen bewährt. Der Anteil an Füllstoff an der Beschichtungszusammensetzung sollte vorzugsweise einen Wert von 50 Gew.-%, und insbesondere von 20 Gew.-%, bezogen auf die Gesamtmenge an Feststoffen in der Zusammensetzung, nicht überschreiten, um die elektrische Leitfähigkeit nicht nachteilig zu beeinflussen. In einer bevorzugten Ausgestaltung enthalten die wässrigen Beschichtungs-Zusammensetzungen weniger als 20 Gew.-% Füllstoffe + Farbmittel, bezogen auf die Gesamtmenge an Feststoffen in der Zusammensetzung, und insbesondere keinen Füllstoff und kein Farbmittel.

Als Flammschutzmittel für die wässrige Beschichtungszusammensetzung können die dem Fachmann bekannten halogen- oder phosphorhaltigen Verbindungen, Aluminiumoxidhydrat, Zinkborat, Ammoniumphosphate, Antimonoxid, Magnesiumhydroxid sowie andere gebräuchliche Verbindungen oder deren Mischungen verwendet werden.

Mittel zur Einstellung des pH-Wertes sind die üblicherweise verwendeteten anorganischen oder organischen, beispielsweise Ammoniak, Alkalimetallbasen wie Kalium- und Natriumhydroxid, Natriumhydrogencarbonat, Natriumcarbonat, Kaliumcarbonat, Kaliumhydrogencarbonat, Erdalkalimetallbasen wie Calciumhydroxid, Calciumoxid, Magnesiumhydroxid oder Magnesiumcarbonat, Alkylamine, wie Ethylamin, Diethylamin, Trimethylamin, Triethylamin, Triisopropylamin und Mono-, Di- und Trialkanolamine wie Ethanolamin, Diethanolamin, Aminomethylpropanol, Aminomethylpropandiol und Trishydroxymethylaminomethan sowie Gemische davon. In der Regel weisen Beschichtungszusammensetzungen auf Basis wässriger Polyurethandispersionen einen pH-Wert von 5 bis 11, vorzugsweise 7 bis 10 auf.

Geeignete oberflächenaktive Substanzen sind die üblicherweise zur Herstellung wässriger Polymerdispersionen verwendeten Emulgatoren (Tenside), Polymertenside und Schutzkolloide. Die Emulgatoren können amphoter, neutral, anionischer oder kationischer Natur sein. Geeignete Emulgatoren sind dem Fachmann aus dem Stand der Technik bekannt, z. B. aus R. Heusch, "Emulsiones" in Ullmanns Encyclopedia of Industrial Chemistry, 5^{th} ed. on CD-Rom, Kapitel 7. Beispiele für nicht-ionische Emulgatoren sind alkoxylierte Fette und Öle, z. B.
Maisölethoxylate, Rizinusölethoxylate, Talgfettethoxylate; Glycerinester, z. B. Glycerinmonostearat; Fettalkoholalkoxylate und Oxoalkoholalkoxylate; Alkylphenolalkoxylate, z. B. Isononylphenolethoxylate; und Zuckertenside, z. B. Sorbitanfettsäureester (Sorbitanmonooleat, Sorbitantristearat), Polyoxyethylensorbitanfettsäureester. Insbesondere verwendet man Fettalkoholethoxylate. Beispiele für geeignete anionische Emulgatoren sind Seifen, Alkansulfonate, Olefinsulfonate, Alkylarylsulfonate, Alkylnaphthalinsulfonate, Sulfosuccinate, Alkylsulfate und Alkylethersulfate, Alkylmethylestersulfonate sowie Gemische davon, vorzugsweise in Form der Natriumsalze. Beispiele für Polymertenside sind: Blockcopolymere wie Polyethylenoxidblockpolypropylenoxid, Polystyrol-blockpolyethylenoxid, und AB-Kammpolymere, z. B. Polymethacryl-comb-polyethylenoxid und Copolymerisate von Acrylsäure und Maleinsäureanhydrid, insbesondere Copolymerisate von Acrylsäure und Maleinsäureanhydrid, vorzugsweise in neutralisierter Form, z. B. in Form der Natrium- oder der Ammoniumsalze. Geeignete Schutzkolloide sind beispielsweise Celluloseether, wie Carboxymethylcellulose, Methylcellulose, Hydroxyethylcellulose, Gummi arabicum, Polyvinylalkohole und Polyvinylpyrrolidon. Der Anteil an oberflächenaktiven Substanzen, bezogen auf die Gesamtfeststoffmenge in der Zusammensetzung, liegt in der Regel im Bereich von 0 bis 10 Gew.-%, insbesondere , vorzugsweise 0,1 bis 5 Gew.-%.

Geeignete Entschäumer sind beispielsweise höhere Alkohole, nichtionogene Acetylenverbindungen, aliphatische Kohlenwasserstoffe mit nichtionogenen Bestandteilen sowie Oligosiloxane. In der Regel sollte die Menge an Entschäumer etwa 1 bis 20 Gew.-% des Tensidanteils ausmachen.

Geeignete Verdicker sind neben den vorgenannten Schutzkolloiden auch Gummi arabicum, Gelatine, Caseine, Stärke, Alginate, Polyether, Cellulose-Derivate wie Methyl-, Carboxymethylcelluose oder Hydroxyethyl- u. Propylcellulose, Polyacrylsäure-Salze, wie das Natriumsalz oder das Ammoniumsalz der Polyacrylsäure, hydrophob modifizierte Polyurethane (Assoziatiwerdicker) sowie anorganische Verdickungsmittel wie Kieselsäure, sowie Gemische davon. Die Menge an Verdickungsmittel hängt naturgemäß von der gewünschten Rheologie ab und kann daher über einen weiten Bereich schwanken. Üblicherweise liegt sie bei 0 bis 10 Gew.-Teilen, bezogen auf 100 Gew.-Teile der Zusammensetzung. Die Viskosität der Beschichtungszusammensetzung liegt üblicherweise im Bereich von 300 bis 30000 mPas, insbesondere im Bereich von 500 bis 5000 mPas.

Gegebenenfalls enthält die Beschichtungszusammensetzung zusätzlich Kondensationsharze, Katalysatoren für die Nachvernetzung, übliche Mattierungsmittel wie Kieselsäurederivate oder übliche Hydrophobiermittel in den hierfür üblichen Mengen.

Zur Herstellung der Beschichtungszusammensetzung vermischt man die wässrige(n) Dispersion(en) des (der) polymeren Bindemittel(s) B, die man gegebenenfalls durch Zugabe von Dispergiermedium auf den gewünschten Feststoffgehalt eingestellt hat, mit dem feinteiligen, nicht filmbildenden, elektrisch leitfähigen Pulver P, und den gegebenenfalls weiteren in der Zusammensetzung vorgesehenen Bestandteilen. Das Vermischen erfolgt in den hierfür üblichen Vorrichtungen, beispielsweise Rührgefässen wie z.B. einem Dissolver.

Die wässrigen Beschichtungs-Zusammensetzungen können grundsätzlich auf beliebige flächige Träger aufgebracht werden und ergeben auf dem flächigen Träger beim Trocknen elektrisch leitfähige Beschichtungen. Vorteilhafterweise eignen sie sich für die Beschichtung flexibler flächiger Träger, insbesondere flächiger textiler Träger (textile Flächengebilde).

Der Begriff flexibler flächiger Träger bzw. flexibles Flächengebilde umfasst grundsätzlich alle flächigen Strukturen, die unzerstört verformbar sind. Hierzu zählen nicht-textile Gebilde wie Kunststofffolien, Papier, Leder und dergleichen, sowie textile Gebilde.

Der Begriff "flächiger textiler Träger" bzw. "textiles Flächengebilde" umfasst sowohl Gewebe und Gewirke, die aus Garnen hergestellt werden, als auch nichtgewebte Vliesstoffe aus Fasern (nonwovens). Als Fasermaterialien kommen grundsätzlich alle für die Herstellung von Textilien üblicherweise eingesetzten Fasermaterialien in Betracht. Hierzu zählen Baumwolle, Wolle, Hanffaser, Sisalfasern, Flachs, Ramie, Polyacrylnitril, Polyesterfasern, Polyamidfasern, Viskose, Seide, Acetatfasern, Triacetatfasern, Aramidfasern und dergleichen. Die erfindungsgemäßen Beschichtungsmittel eignen sich besonders für textile Flächengebilde auf der Basis von Fasern wie Baumwolle, Wolle, Polyesterfasern, Polyamidfasern und deren Mischungen.

Die nach dem erfindungsgemäßen Verfahren erhältliche Beschichtung weist in der Regel im Mittel eine Dicke von wenigstens 10 µm, vorzugsweise 10 µm bis 100 µm auf. Die Auflage an Pulver P beträgt vorzugsweise wenigstens 10 g/m² und liegt insbesondere im Bereich von 15 bis 100 g/m².

Die wässrigen Beschichtungszusammensetzungen werden zur Herstellung der elektrisch leitfähigen Beschichtungen nach den für die Beschichtung von flächigen Trägern üblichen Methoden aufgebracht, z. B. durch Spritzen, Sprühen, Rollen, Drucken, Pflatschen, Rakeln, Streichen oder Tauchen.

Im Falle von Textilien können die wässrigen Beschichtungs-Zusammensetzungen als verdünnte Flotte, nach Zusatz von Schaummitteln als Schaum oder nach Zusatz von Verdickungsmitteln als Paste aufgetragen werden. Sprühverfahren sind ebenfalls möglich und ermöglichen einen sehr gleichmäßigen Auftrag der wässrigen Beschichtungs-Zusammensetzungen. Der Feststoffgehalt der wässrigen Beschichtungszusammensetzung beim Sprühverfahren liegt in der Regel im Bereich von 5 bis 25 Gew.-%. Bevorzugt ist das Auftragen in Form einer Flotte oder Paste, wobei der Feststoffgehalt der Zusammensetzung dann vorzugsweise im Bereich von 15 bis 90 Gew.-%, insbesondere 25 bis 80 Gew.-% liegt.

Die Beschichtung kann als Direktbeschichtung, d. h. das textile Flächengebilde wird direkt mit der Beschichtungszusammensetzung bestrichen oder durch Umkehr- oder Transferbeschichtung erfolgen.

Gegebenenfalls kann man die wässrige Beschichtungszusammensetzung vor ihrem Aufbringen auf den textilen Träger filtrieren, um Agglomerate aus der Beschichtungszusammensetzung zu entfernen, die die Qualität der Beschichtung nachteilig beeinflussen würden.

Vorzugsweise bringt man die wässrige Beschichtungszusammensetzungen im Direktverfahren durch Rakeln auf, beispielsweise durch Luft-, Gummituch- und Walzen-Rakeln. Vorteilhaft ist auch das Rotationssiebdruckbeschichtungs-, Pflatschen- oder Reverse-Roll-Coater-Verfahren.

Erfindungsgemäß wird man das Beschichtungsmittel in einer Menge auftragen, dass eine trockene Beschichtung in einer Auflage von 10 bis 100 g/m², ganz besonders bevorzugt 20 bis 80 g/m² Gewebe resultiert. Zum Verfestigen wird man nach dem Aufbringen der wässrigen Beschichtungszusammensetzung zunächst das wässrige Dispergiermittel entfernen, d.h. die feuchte Beschichtung trocknen. Das Trocknen erfolgt dann in der Regel unter Normaldruck bei Temperaturen oberhalb 100 °C, vorzugsweise im Bereich von etwa 130 bis 200 °C. Der Trockenvorgang nimmt in der Regel 30 Sekunden bis 5 Minuten in Anspruch. Aber auch längere Trocknungszeiten sind möglich. Bevorzugt ist eine progressive Trocknung, d.h. die Trocknungstemperatur wird im Verlauf der Trocknung gesteigert, z.B. von einem Anfangswert von 50-80 °C auf einen Endwert von 130-200°C. Auf diese Weise werden besonders gute Beschichtungsqualitäten erhalten.

Sofern ein vernetzbares Bindemittel eingesetzt wird erfolgt das Trocknen bei Temperaturen unterhalb der Vernetzungstemperatur. Die Vernetzungstemperatur ist die Temperatur, oberhalb derer die chemische Reaktion der vernetzbaren Gruppen unter Bindungsbildung in einer für übliche Verarbeitungsgeschwindigkeiten von Textilien (üblicherweise > 5 m/min) ausreichenden Geschwindigkeit abläuft. Die Vernetzungstemperatur kann der Fachmann anhand einfacher Experimente bestimmen oder den Herstellerangaben für das Bindemittel entnehmen. Die Vernetzungstemperatur bevorzugter Polymere wird in der Regel oberhalb 140 °C und insbesondere oberhalb 150 °C liegen z.B. im Bereich von 160 °C bis 220 °C. Dem Trocknen folgt dann in der Regel ein sogenannter Kondensationsschritt, bei dem das beschichtete getrocknete textile Flächengebilde auf Temperaturen oberhalb der Vernetzungstemperatur erwärmt wird. Die Kondensationsdauer liegt üblicherweise im Bereich von 1 min. bis 5 min.

Gegebenenfalls wird man das erfindungsgemäß beschichte textile Flächengebilde noch verpressen und/oder kalandrieren, um eine besondere Festigkeit der Beschichtung zu erhalten.

Gegebenenfalls unterzieht man die erfindungsgemäß beschichteten, vorzugsweise textilen Flächengebilde noch einer Nachbehandlung, z. B. einer Nachimprägnierung. Als Imprägniermittel eignen sich beispielsweise Essigsäure/Fluorcarbonharzemulsionen. Bei den Fluorcarbonsäureharzen handelt es sich insbesondere um Polymere, deren Fluoranteil im Bereich von 1 bis 10 Gew.-% liegt.

In einer bevorzugten Ausführungsform bringt man auf den Träger eine oder mehrere Schichten der wässrigen Beschichtungszusammensetzung auf. In einer anderen bevorzugten Ausführungsform der Erfindung umfasst das Flächengebilde zusätzlich eine erste konventionelle Basisbeschichtung, die wenigstens ein polymeres Bindemittel und gegebenenfalls ein oder mehrere feinteilige konventionelle, elektrisch leitfähige Zusätze enthält. Der Auftrag der konventionellen Beschichtung erfolgt in üblicher Weise. Z. B. trägt man nach einem der zuvor genannten Verfahren zunächst eine Basisbeschichtung, beispielsweise auf Basis einer wässrigen Polyurethandispersion, die gegebenenfalls Rußpartikel oder andere leitfähige Zusätze enthält, auf den textilen Träger auf. In einem zweiten Auftrag appliziert man dann die Beschichtungszusammensetzung, welche die Komponenten i) und ii) aufweist, auf das so vorbehandelte Flächengebilde.

Die unter Verwendung der wässrigen Beschichtungszusammensetzung hergestellten beschichteten textilen Flächengebilde zeichnen sich durch eine hohe elektrische Leitfähigkeit aus, die um 5 bis 6 Zehnerpotenzen oberhalb der Leitfähigkeit für eine Antistatikausrüstung liegt. Die elektrische Leitfähigkeit geht aufgrund der hohen Abriebfestigkeit der Beschichtung auch bei mechanischer Belastung des textilen Flächengebildes nicht verloren.

Die erfindungsgemäß beschichteten textilen Flächengebilde eignen sich aufgrund ihrer hohen elektrischen Leitfähigkeit zur Abschirmung von und zum Schutz vor elektromagnetischen und elektrostatischen Feldern und können daher in sehr vielen Bereichen eingesetzt werden, beispielsweise zur Herstellung von Schutzkleidung, z. B. Arbeitsschutzkleidung für Fernmeldetechniker, zur elektromagnetischen Abschirmung von Räumen, z. B. in Form von Vorhängen, Paravents und Wandbekleidungen, zur Abschirmung und Isolierung von Kabeln und elektronischen Geräten, für Schutzvorrichtungen von elektronischen Einheiten oder allgemein von Geräten, die äußeren elektromagnetischen Feldern ausgesetzt sind.

Ferner kann man die Wirkung eines fließenden Stromes, wie Erwärmung des textilen Flächengebildes, ausnutzen. Diese lässt sich beispielsweise durch temperaturabhängige Farbstoffe im Gewebe sichtbar machen. Eine weitere Anwendung ist die Verwendung der erfindungsgemäß beschichteten textilen Flächengebilde als flexible Leiterbahnen. Durch Wahl des Beschichtungsverfahrens ist es möglich, gezielt eine Richtungsabhängigkeit der Leitfähigkeit zu erzeugen, die in der Beschichtungsrichtung sehr viel stärker als in der dazu senkrechten Richtung.

Da die erfindungsgemäß beschichteten textilen Flächengebilde gleichzeitig den Lärmpegel von Geräten oder von außen dämpfen, lässt sich Geräuschdämpfung und Schutz vor elektromagnetischer Strahlung auf einfache Weise miteinander verbinden.

Ein weiterer Vorteil der wässrigen Beschichtungszusammensetzung ist die geringe Dichte der darin erhaltenen, die Beschichtung bildenden Feststoffe, insbesondere der für die Leitfähigkeit maßgeblichen Feststoffe, so dass die erfindungsgemäß erhältlichen textilen Flächengebilde ein vergleichsweise geringes Flächengewicht aufweisen. Ein weiterer Vorteil der wässrigen Beschichtungszusammensetzungen ist ihr geringer Gehalt an flüchtigen organischen Verbindungen wie Lösungsmitteln.

Die folgenden Beispiele dienen der Erläuterung der Erfindung und sind nicht einschränkend zu verstehen.

### I Herstellungsbeispiele

### 1. Zusammensetzung Z1

60 Gew.-Teile einer kationischen, vernetzbaren wässrigen Polyesterurethan-Dispersion mit einer Glasübergangstemperatur von - 5°C und einem Feststoffgehalt von 50 Gew.-% und 40 Gew.-Teile Wasser wurden in einem Dissolver bei Raumtemperatur homogenisiert. Anschließend fügte man unter Rühren 0,5 bis 1,0 Gewichtsteil(e) Hydroxymethylcellulose als wässrige 1 bis 2 gew.-%ige Lösung hinzu und stellte mit Ammoniak/Wasser den pH-Wert auf 9,0 bis 9,5 ein. Die Viskosität des Gemisches betrug etwa 1000 mPas. Anschließend rührte man 60 Gewichtsteile eines elektrisch leitfähigen Pulvers P ein und rührte, bis die Lösung homogen war.

Als wässrige kationische Polyesterurethandispersion wurde Rotta® WS 80525 der Fa. Rotta GmbH, Mannheim, eingesetzt.

Als elektrisch leitfähiges Pulver P, dienten mit Silber beschichtete Glashohlkugeln aus Borosilikat-Glas mit einem mittleren Partikeldurchmesser von 16,5 µm und einem Silbergehalt von 32,3 Gew.-%. Diese Kugeln unter der Bezeichnung Conduct-O-Fil SH 400 S 33 von der Firma Potters-Ballotini, Kircheim-Bolanden, Deutschland, vertrieben.

### 2. Zusammensetzung Z2 :

Analog Zusammensetzung Z1 stellte man eine Beschichtungszusammensetzung her, wobei man jedoch anstelle von 60 Gew.-Teilen Pulver P 60 Gew.-Teile einer Mischung aus Pulver P und versilberten Kupferblättchen im Mengenverhältnis von 1:2 einsetzte.

Die versilberten Kupferblättchen hatten eine Partikelgröße < 63 µm (88 % < 40 µm) und enthielten 13 Gew.-% Silber. Da Kupferpulver wird unter der Bezeichnung KONTAKTARGAN^{®} der Fa. Eckart, D-90763 Fürth, vertrieben.

### 3. Zusammensetzung Z3 :

30 Gew.-Teile einer handelsüblichen, anionischen, vernetzbaren wässrigen Polyesterurethan-Dispersion mit einer Glasübergangstemperatur von -5°C und einem Feststoffgehalt von 50 Gew.-% (Rotta® WS 80525) wurden mit 16 Gew.-Teilen Wasser und 54 Gew.-Teilen einer wässrigen Dispersion von Poly(3,4-ethylendioxythiophen)/Polystyrolsulfonat (Baytron® P) in einem Dissolver bei Raumtemperatur homogenisiert. Anschließend fügte man unter Rühren 0,5 bis 1,0 Gewichtsteil(e) Hydroxymethylcellulose als wässrige 1 bis 2 gew.-%ige Lösung hinzu und stellte mit Ammoniak/Wasser den pH-Wert auf 9,0 bis 9,5 ein. Die Viskosität des Gemisches betrug etwa 1000 mPas. Anschließend rührte man 60 Gewichtsteile eines elektrisch leitfähigen Pulvers P ein und rührte, bis die Lösung homogen war.

Bei der wässrigen Dispersion von Poly(3,4-ethylendioxythiophen)/Polystyrolsulfonat handelt es sich um das Produkt Baytron® P der BAYER AG, Leverkusen, das 0,5 Gew.-% kationisches Poly(3,4-ethylendioxythiophen und als Gegenion 0,8 Gew-% Polystyrolsulfonat enthält.

### 4. Zusammensetzung ZV1 (Vergleich):

Analog Zusammensetzung Z1 stellte man eine Beschichtungszusammensetzung her, wobei man jedoch anstelle von 60 Gew.-Teilen Pulver P 60 Gew.-Teile der in Zusammensetzung Z2 eingesetzten versilberten Kupferblättchen einsetzte.

### 5. Zusammensetzung ZV2 (Vergleich):

Analog Zusammensetzung Z1 stellte man eine Beschichtungszusammensetzung her, wobei man jedoch anstelle von 60 Gew.-Teilen Pulver P 60 Gew.-Teile einer Rußdispersion verwendete.

Die Rußdispersion enthielt 20 Gew.-% Gasruß mit Teilchengrößen von 0,2 bis 5 µm (Primärteilchengröße 20 nm), 13 Gew.-% Tensid und 13 Gew.-% sulfoniertes aromatisches Polymer (Leitruß TAM AN^{®} 1-20/160 der Fa. Degussa).

### 6. Zusammensetzung ZV3 (Vergleich):

Analog Zusammensetzung Z1 stellte man eine Beschichtungszusammensetzung her, wobei man jedoch anstelle von 60 Gew.-Teilen Pulver P 60 Gew.-Teile Carbonstapelfasern verwendete.

Die Carbonstapelfasern wiesen durchschnittliche Faserlängen von 130 µm auf und werden unter der Bezeichnung DONA CARBO® S241 von der Fa. Ashland Südchemie (Wülfrat-Hilden) vertrieben.

### 7. Zusammensetzung ZV4 (Vergleich):

Analog Zusammensetzung Z1 stellte man eine Beschichtungszusammensetzung her, wobei man jedoch anstelle von 60 Gew.-Teilen Pulver P, 60 Gew.-Teile einer Mischung aus einem Teil Pulver P und zwei Teilen leitfähiger Carbonstapelfasern einsetzte.

### 8. Zusammensetzung ZV5 (Vergleich):

Analog Zusammensetzung Z1 stellte man eine Beschichtungszusammensetzung her, wobei man jedoch anstelle von 60 Gew.-Teilen Pulver P, 60 Gew.-Teile Glimmer einsetzte.

Bei dem Glimmer handelt es sich um ein Gemisch aus 57 Gew.-% Siliciumoxid (SiO₂), beschichtet mit Antimon dotiertem Zinnoxid (43 Gew.-% Sn-SbO₂). Die Schüttdichte des Gemischs betrug 320 g/l, 98 % der Partikelteilchen ist in dieser Mischung < 15 um. Der Glimmer wird bei der Firma Merck in Darmstadt/Deutschland unter dem Handelsnamen Minatec® 40 CM vertrieben.

### 9. Zusammensetzung ZV 6 (Vergleich):

Analog Zusammensetzung Z1 stellte man eine Beschichtungszusammensetzung her, wobei man jedoch anstelle von 60 Gew.-Teilen Pulver P, 60 Gew.-Teile Stahlfasern, Bekaert-Shield® SF/12/180-260/316 L einsetzte.

Bei den Stahlfasern handelt es sich um rostfreie Stahlfasern mit einem Durchmesser von 12 µm und einer Fraktionslänge 180 - 260 µm. Die Stahlfasern werden bei der Fa. Bekaert-Faser Vertriebs-GmbH, Idstein/Deutschland, vertrieben.

### 10. Zusammensetzung ZV7 (Vergleich):

Analog Zusammensetzung Z1 stellte man eine Beschichtungszusammensetzung her, wobei man jedoch anstelle von 60 Gew.-Teilen Pulver P, 60 Gew.-Teile Standardaluminiumpulver NTC^{®} einsetzte.

Das Standardaluminiumpulver NTC^{®} wird von der Fa. Eckart Granules, Fürth/Deutschland, vertrieben. Die Aluminiumpartikel sind blättchenförmig und fettfrei. 90 % der Partikel sind < 75 µm, 50 % sind < 42 µm und 10 % < 16 µm.

### 11. Zusammensetzung ZV8 (Vergleich)

Analog Zusammensetzung Z1 stellte man eine Beschichtungszusammensetzung her, wobei man jedoch anstelle von 60 Gew.-Teilen Pulver P, 60 Gew.-Teile handelsüblichen Zinkpulvers einsetzte.

### II Anwendungsbeispiele:

### Beispiel 1:

Die Beschichtungszusammensetzung Z1 wurde auf eine Baumwoll-Hämmerle-Ware mit einem Flächengewicht von 122 g/m² als Einstrichbeschichtung mit einer Luftrakel aufgetragen. Der Auftrag erfolgte in einer Menge, dass eine trockene Beschichtung in einer Auflage von etwa 22,5 g/m², entsprechend einer Auflage an Pulver P von etwa 16 g/m² resultierte. Nach dem Aufbringen der Beschichtungszusammensetzung trocknete man 2 min. bei 150 °C.

### Beispiel 2:

In zu Beispiel 1 analoger Weise wurde die Zusammensetzung Z2 auf Baumwollgewebe aufgebracht. Hierbei resultierte eine Auflage an Pulver P von etwa 10 g/m².

### Beispiel 3:

Zunächst wurde eine Beschichtungszusammensetzung aus 60 Gew.-Teilen der bei Z1 verwendeten wässrigen Polyurethan-Dispersion, 40 Gew.-Teile Wasser und 1,0 Gew.-Teile Verdicker (1 bis 2 gew.-%ige wässrige Hydroxyethylcellulose) auf einer Baumwoll-Hämmerle-Ware mit einem Flächengewicht von 122 g/m² als Erststrich mit einem Luftrakel aufgetragen. Anschließend wurde 2 min. bei 150 °C getrocknet. Die Auflage des Erststrichs betrug 50 g/m². Dann brachte man die Beschichtungszusammensetzung Z1 in der für Beispiel 1 beschriebenen Weise auf. Der Auftrag erfolgte in einer Menge, dass eine Auflage von etwa 22,5 g/m², entsprechend einer Auflage an Pulver P von etwa 15 g/m² resultierte.

### Vergleichsbeispiel V1:

In zu Beispiel 1 analoger Weise wurde die Zusammensetzung ZV1 auf Baumwollgewebe aufgebracht. Hierbei resultierte eine Auflage an versilberten Kupferblättchen von etwa 28 g/m².

### Vergleichsbeispiel V2:

In zu Beispiel 1 analoger Weise wurde die Zusammensetzung ZV2 auf Baumwollgewebe aufgebracht. Hierbei resultierte eine Auflage an Ruß von etwa 32 g/m².

### Vergleichsbeispiel V3:

In zu Beispiel 1 analoger Weise wurde die Zusammensetzung ZV3 auf Baumwollgewebe aufgebracht. Hierbei resultierte eine Auflage an Carbonstapelfasern von etwa 35 g/m².

### Vergleichsbeispiel V4:

In zu Beispiel 1 analoger Weise wurde die Zusammensetzung ZV4 auf Baumwollgewebe aufgebracht. Hierbei resultierte eine Auflage an Pulver P von etwa 19,2 g/m² und eine Auflage von leitfähigen Carbonstapelfasern von etwa 38,4 g/m².

### Beispiel 4:

Analog Beispiel 3 wurde zunächst die Zusammensetzung ZV2 (rußhaltig) und dann die Beschichtungszusammensetzung Z1 auf einer Baumwoll-Hämmerle-Ware aufgebracht. Die resultierende Auflage des Erststrichs betrug 47 g/m², die durch den Zweitstrich aufgebrachte Auflage mit Pulver P betrug 18 g/m².

### Beispiel 5:

In zu Beispiel 1 analoger Weise wurde die Zusammensetzung Z3 auf Baumwollgewebe aufgebracht. Die resultierende Auflage an elektrisch leitfähigem Polymer Baytron® P betrug 0,21 g/m², die resultierende Auflage an elektrisch leitfähigem Pulver P betrug 16,7 g/m².

### Vergleichsbeispiel V5:

In zu Beispiel 1 analoger Weise wurde die Zusammensetzung ZV5 auf Baumwollgewebe aufgebracht. Hierbei resultierte eine Auflage an Glimmer von etwa 40 g/m².

### Vergleichsbeispiel V6:

In zu Beispiel 1 analoger Weise wurde die Zusammensetzung ZV6 auf Baumwollgewebe aufgebracht. Hierbei resultierte eine Auflage an Stahlfasern von etwa 40 g/m².

### Vergleichsbeispiel V7:

In zu Beispiel 1 analoger Weise wurde die Zusammensetzung ZV7 auf Baumwollgewebe aufgebracht. Hierbei resultierte eine Auflage an Aluminiumpulver von etwa 42 g/m².

### Vergleichsbeispiel V8:

In zu Beispiel 1 analoger Weise wurde die Zusammensetzung ZV8 auf Baumwollgewebe aufgebracht. Hierbei resultierte eine Auflage an Zinkpulver von etwa 39 g/m².

### III Untersuchung der elektrischen Leitfähigkeit:

Die Messung der Stromstärke erfolgte in einem Klimaraum bei 20 °C. Die Probe wies eine Restfeuchte von 65 % auf. Zur Bestimmung der Stromstärke legte man auf ein 10 cm breites Probestücks des jeweiligen beschichteten Gewebes auf der Beschichtungsseite zwei mit je 1 kg beschwerte Kupferleisten im Abstand von 10 cm auf. Bei einer angelegten Spannung von 12,5 V wurde die Stromstärke gemessen. Die Ergebnisse sind in Tabelle 1 zusammengestellt. Die Ergebnisse zeigen, dass nur bei Verwendung von Pulverteilchen, die einen Isolator-Kern und eine Edelmetallbeschichtung aufweisen, Beschichtungen mit ausreichender Leitfähigkeit erhalten werden.

**Tabelle 1:**

| Beispiel | Strom [A] |
|---|---|
| 1 | 1,8 |
| 2 | 2,4 |
| V1 | 0,2 |
| V2 | Strom unter 30 mA |
| V3 | Strom unter 30 mA |
| V4 | Strom unter 30 mA |
| 3 | 2,2 |
| 4 | 2,4 |
| 5 | 2,9 |
| V5 | Strom unter 30 mA |
| V6 | Strom unter 30 mA |
| V7 | Strom unter 30 mA |
| V8 | Strom unter 30 mA |

## Patentansprüche

1. Verfahren zur Herstellung elektrisch leitfähiger, textiler Flächengebilde, **dadurch gekennzeichnet, dass** man auf einen flächigen, elektrischen Strom nicht leitenden, textilen Träger wenigstens eine wässrige Beschichtungszusammensetzungen, enthaltend:
- als Komponente i) wenigstens ein polymeres Bindemittel B in Form einer wässrigen Dispersion, wobei das polymere Bindemittel wenigstens 50 Gew.-%, bezogen auf das Gesamtgewicht des Bindemittels, Polyurethane umfasst und
- wenigstens ein feinteiliges, nicht filmbildendes Pulver P, dessen Pulverteilchen einen Kern, welcher elektrischen Strom nicht leitet, und wenigstens eine auf dem Kern angeordnete Schicht aus einem elektrisch leitfähigen Material umfassen, wobei das elektrisch leitfähige Material aus wenigstens einem Edelmetall oder einer überwiegend aus wenigstens einem Edelmetall bestehenden Legierung besteht, oder eine Mischung aus Pulver P und einem feinteiligen, versilberten Metallpulver als Komponente ii),
worin das Gewichtsverhältnis von Bindemittel B zu Komponente ii) im Bereich von 1:1 bis 1:20 liegt;
in einer Menge aufbringt und zu einer Beschichtung verfestigt, dass die erhaltene Beschichtung wenigstens 5 g/m² der Komponente ii) enthält und dass eine trockene Beschichtung mit einer Auflage im Bereich von 10 bis 100 g/m² resultiert.

2. Verfahren nach Anspruch 1, worin die auf dem Kern der Pulverteilchen angeordnete Schicht aus einem elektrisch leitfähigen Materialzu wenigstens 50 Gew.-% aus Silber besteht.

3. Verfahren nach Anspruch 1 oder 2, worin der Kern der Pulverteilchen aus Glas besteht.

4. Verfahren nach einem der vorherigen Ansprüche, worin die Pulverteilchen einen mittleren Durchmesser von 1 bis 100 µm aufweisen.

5. Verfahren nach einem der vorherigen Ansprüche, worin zumindest der Polyurethanbestandteil des polymeren Bindemittels B eine Glasübergangstemperatur T_{G} im Bereich von -40 bis + 60 °C aufweist.

6. Verfahren nach einem der vorhergehenden Ansprüche, worin die Komponente ii) eine Mischung aus Pulver P und versilbertem Metallpulver im Gewichtsverhältnis von 1:5 bis 5:1 ist.

7. Verfahren nach einem der vorhergehenden Ansprüche, wobei man auf den flächigen textilen Träger eine erste konventionelle Basisbeschichtung, die wenigstens ein polymeres Bindemittel B enthält, und anschließend wenigstens eine zweite, auf der ersten Beschichtung angeordnete, elektrisch leitfähige Beschichtung aufbringt.

8. Elektrisch leitfähiges, textiles Flächengebilde, erhältlich durch ein verfahren gemäß einem der vorhergehenden Ansprüche.

## Claims

1. Process for producing electrically conductive textile fabrics, **characterized in that** at least one aqueous coating composition containing:
- as component i), at least one polymeric binder B in the form of an aqueous dispersion, where the polymeric binder comprising at least 50 wt%, based on total binder weight, of polyurethanes, and
- at least one finely divided non-filming powder P, the pulverulent particles of which comprise an electrically nonconductive core and at least one layer arranged on the core and composed of an electrically conductive material, where the electrically conductive material consists of at least one noble metal or of an alloy consisting predominantly of at least one noble metal, or a mixture of powder P and a finely divided silverized metallic powder as component ii), wherein the weight ratio of binder B to component ii) is in the range from 1:1 to 1:20,
is applied in such an amount to an electrically nonconductive sheetlike textile substrate and solidified into a coating layer that the coating layer obtained contains at least 5 g/m² of component ii) and that a dry coating layer having an add-on ranging from 10 to 100 g/m² results.

2. Process according to Claim 1, wherein the layer arranged on the core of the pulverulent particles and composed of an electrically conductive material consists of silver to an extent of at least 50 wt%.

3. Process according to Claim 1 or 2, wherein the core of the pulverulent particles consists of glass.

4. Process according to any of the preceding claims, wherein the pulverulent particles have a mean diameter in the range from 1 to 100 µm.

5. Process according to any of the preceding claims, wherein at least the polyurethane constituent of the polymeric binder B has a glass transition temperature T_{G} in the range from -40 to +60°C.

6. Process according to any of the preceding claims, wherein component ii) is a mixture of powder P and silverized metallic powder in a weight ratio of 1:5 to 5:1.

7. Process according to any of the preceding claims, where the sheetlike textile substrate has applied to it a first conventional base coating layer, which contains at least one polymeric binder B, and then at least a second electrically conductive coating layer arranged on the first coating layer.

8. Electrically conductive textile fabric obtainable by a process according to any of the preceding claims.

## Revendications

1. Procédé de fabrication de structures textiles plates électroconductrices, **caractérisé en ce qu'**au moins une composition de revêtement aqueuse, contenant :
- en tant que composant i), au moins un liant polymère B sous la forme d'une dispersion aqueuse, le liant polymère comprenant au moins 50 % en poids, par rapport au poids total du liant, de polyuréthanes, et
- au moins une poudre P finement divisée, non filmogène, dont les particules de poudre comprennent un noyau, qui ne conduit pas le courant électrique, et au moins une couche d'un matériau électroconducteur agencée sur le noyau, le matériau électroconducteur étant constitué d'au moins un métal noble ou d'un alliage essentiellement constitué d'au moins un métal noble, ou un mélange d'une poudre P et d'une poudre métallique argentée finement divisée en tant que composant ii),
le rapport en poids entre le liant B et le composant ii) se trouvant dans la plage allant de 1:1 à 1:20 ;
est appliquée en une quantité sur un support textile plat ne conduisant pas le courant électrique et solidifiée en un revêtement, **en ce que** le revêtement obtenu contient au moins 5 g/m² du composant ii) et **en ce qu'**un revêtement sec d'une charge dans la plage allant de 10 à 100 g/m² est obtenu.

2. Procédé selon la revendication 1, dans lequel la couche d'un matériau électroconducteur agencée sur le noyau des particules de poudre est constituée à au moins 50 % en poids d'argent.

3. Procédé selon la revendication 1 ou 2, dans lequel le noyau des particules de poudre est constitué de verre.

4. Procédé selon l'une quelconque des revendications précédentes, dans lequel les particules de poudre présentent un diamètre moyen de 1 à 100 µm.

5. Procédé selon l'une quelconque des revendications précédentes, dans lequel au moins le constituant polyuréthane du liant polymère B présente une température de transition vitreuse T_{G} dans la plage allant de -40 à +60 °C.

6. Procédé selon l'une quelconque des revendications précédentes, dans lequel le composant ii) est un mélange d'une poudre P et d'une poudre métallique argentée en un rapport en poids de 1:5 à 5:1.

7. Procédé selon l'une quelconque des revendications précédentes, dans lequel un premier revêtement de base classique, qui contient au moins un liant polymère B, est appliqué sur le support textile plat, puis au moins un second revêtement électroconducteur agencé sur le premier revêtement.

8. Structure textile plate électroconductrice, pouvant être obtenue par un procédé selon l'une quelconque des revendications précédentes.
